Europäisches Patentamt

(19) European Patent Office

Office européen des brevets

(11) Publication number: **0 075 731**
**A2**

(12) # EUROPEAN PATENT APPLICATION

(21) Application number: **82107798.9**

(22) Date of filing: **25.08.82**

(51) Int. Cl.³: **G 06 F 15/20**

(30) Priority: **24.09.81 US 305260**

(43) Date of publication of application:
**06.04.83 Bulletin 83/14**

(84) Designated Contracting States:
**DE FR GB IT**

(71) Applicant: **International Business Machines Corporation**

**Armonk, N.Y. 10504(US)**

(72) Inventor: **Horn, Gary Randall**
**1603 Sage Hollow Circle**
**Austin Texas 78758(US)**

(72) Inventor: **Shipp, Kenneth Osborn Jr.**
**1108 Gemini Drive**
**Austin Texas 78758(US)**

(74) Representative: **Gallois, Gérard**
**COMPAGNIE IBM FRANCE Département de Propriété Industrielle**
**F-06610 La Gaude(FR)**

(54) Column formatting by typed example.

(57) Column formatting by operator typed examples in the creation of the layout of columns widths and gutters for new and revision of old multitext column tables in an interactive word processor.

EP 0 075 731 A2

./...

Create Column Layout
Frame for Existing Table

**FIG. 5**

```
Layout Table        |Voluntary Ed. Memo        |                    |
DSK001|         |                  |Pg.  1 |Ln. 4      |Kyb  1  |Pitch   12


<<2...:....3...:....4...:....5...T:.:..6....:....7...:....8....:.:..>>...:..
aaaaaaa·aa                    aaaaaaa·aa                   aaaaaaa·aa_

Dept. 234                     Dept. 432                    Dept. 511

$ 4.245.28                    $ 7,543.54                   $ 4,333.22

  2,345.98                      5,674.57                     1,870.97

  1,111.98                      7,089.08                     7,645.34

  3,443.89                      8,465.78                     4,673.67

  3,585.39                      4,674.57                     1,423.56

  2,834.34                      4,568.80                     8,656.78

  2,423.54           .          4,745.66                     8,687.87

1.  Type longest entry of each column (a's will appear).

            For Normal Column:  Type entry (Press TAB to set each tab stop).

        For Decimal-Aligned Column:  Type number with decimal point.

          For Flush Right Column:  Type entry, then press RET.

2.  Press COLUMN to separate each column.

3.  Press LAYOUT again to automatically adjust spacing.

4.  Press ENTER to type new table, or press ↓
        to move cursor to last line of existing table, then press ENTER.
```

COLUMN FORMATTING BY TYPED EXAMPLE

## Description

### Technical Field of the Invention

This invention relates to word processing, and more particularly, to machine assisted interactive method and means for operator keyed text table and column formatting operations.

### Background Art

Patent US-A-3,952,852, issued April 27, 1976, discloses a system having a keyboard and printer, a buffer and control, and a multicolumn playout control unit. During setup, a tab field for defining the printing locations of the columns can be set up by operator key. The columns, which are stored sequentially, are printed out in a side-by-side manner, the beginning of each column being defined by the keying of a column begin code. In contrast, in word processing systems where text stream input is stored and displayed, tables of multiple columns of text or data are formatted by an operator involving a displayable scale line on the system, independently ascertaining column widths and gutters, and then counting and entering the tab stops along the scale line. The opportunities for error are greatly increased in such a multiple stage operation.

Word processing is to be distinguished from text processing in both the kind and degree of facilities available to the operator. Text processing involves the use of a large capacity CPU shared among multiple terminals empowered with a text processor such as SCRIPTS/VS having rapid access to megabytes of fast DASD storage. In text systems, threaded data lists executed in SCRIPTS permit flexible operator formatting taking advantage of the sophisticated processing operations on list pointers and indices. In contrast, word processing is focused on stand alone terminals in which letters, small documents, and memos of less than say 50 pages are processed by microcomputers interacting with limited diskette storage of 200 or 300 kilobyte capacity. Documents and pages are processed as end marked (delimited) simply structured character strings with few embedded controls. The comparative absence of data structures saves memory but requires special formatting considerations, such as document composing for tables, and the like.

## Description of the Invention

The technical advance solved by the method of the invention is the formatting of a table of columns and gutters by way of typed example in both the creation of new formats and the revision of the old. In this regard, the operator keys in text characters defining the maximum column width and tab stops for the column, and spaces over to the next column and repeats this for each of the columns in a newly created format. This single entry permits the column and gutter widths to be automatically aligned with tab stops. This formatted column example line is then vector encoded and saved by the system. If it is subsequently desired to revise a saved table, its encoded format line is recalled, rebuilt, and then revised by entering additional text and control characters defining an altered width or tab stop settings of an existing column or a new column. This revised column example line is then encoded and saved. The encoding is a memory conservation feature by saving a compacted parameter set of formats. There is also provided an automatic one-character wide gutter insertion when creating a new column to prevent the operator from failing to include a gutter after having formatted adjacent columns.

## Brief Description of the Drawings

FIG. 1 depicts a word processor system configuration including soft and hard copy output facilities, internal and external memory, and bus coupled microprocessor and keyboard.

FIG. 2 delineates the partial register organization of the microprocessor shown in FIG. 1.

FIG. 3 is a display screen (soft copy) layout of information as viewed by the word processor operator.

FIGS. 4 - 7 delineate the display in the diverse column layout instances as implemented by the interactive method and means of the invention.

FIG. 8 shows table and column layout spatial definitions.

Description of an Embodiment of the Invention

System Machine Description

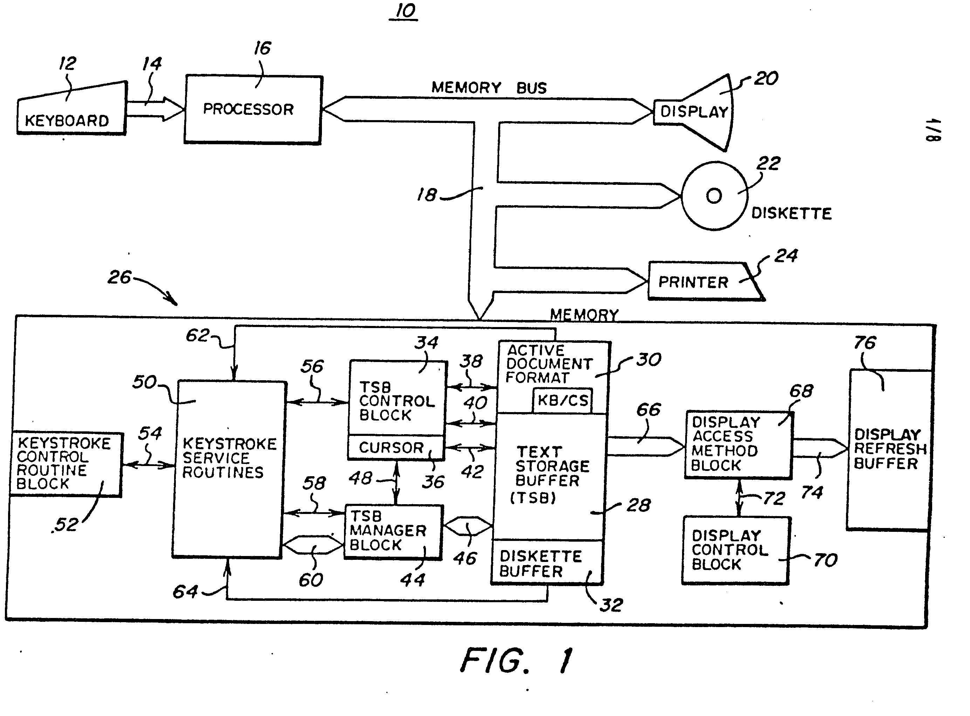

Referring now to FIG. 1, there is shown a word processing system 10 which includes a keyboard 12 for receiving text and transmitting the text through a channel 14 to a processor 16. A memory bus 18 is connected to the processor 16 as well as to display 20, such as a CRT, a diskette drive 22, a printer 24, and a random access memory 26.

An operator enters a text stream through the keyboard 12 and each page of text is stored and processed in the memory 26. As the text stream is received in memory 26, it is also presented on display 20. After the text has been entered into keyboard 12, it can be stored on diskette 22 or printed out on printer 24. The memory 26 includes a number of data areas and functional programs for operating with the text stored in system 10. The text and related control functions are stored in a text storage buffer 28 which includes an active format section 30 and a diskette buffer 32. The keyboard character set (KB/CS) for the document in process is stored in the active format section 30.

A text storage buffer control block 34 serves as the data area for the text storage buffer 28. A cursor control sect-

**0075731**

ion 36 is included within the text storage control block 34. Block 34 is linked through a channel 38 to the active format section 30 and through a channel 40 to the text storage buffer 28. The cursor block 36 is connected through a channel 42 to the text storage buffer 28.

A text storage buffer manager block 44 is coupled to a channel 46 to the next storage buffer 28. Buffer 44 is further coupled through a channel 48 to the TSB control block 34.

As each character is entered through the keyboard 12, it is received at the memory 26 and processed by one or more key stroke service routines stored in memory 50 as executed by processor 16. A key stroke control unit block 52 is a data area which determines the selected key stroke routine for processing the received character. Block 52 is linked to the key stroke service routine 50 through a channel 54. The key stroke service routine block 50 is further linked through a channel 56 to the text storage buffer control block 34 and through channels 58 and 60 to TSB manager block 44.

The active format section 30 is connected through channel 62 to the key stroke service routines block 50. The diskette buffer is connected through a channel 64 to the key stroke service routines 50.

The text characters and control information in text storage buffer 28 is communicated through channel 66 to a display access method block 68. This serves as an interface for the display 20. Corresponding access method blocks for the keyboard, diskette, and printer are substituted when communication with these units is required. Display control block 70 is connected through path 72 to the access method block 68. The display control bloc 70 and display access method block 68 provide a window which may be srolled relative to the contents of the TSB 28.

Text information from the text storage buffer is transmitted through path 74 to a display refresh buffer 76. The information stored in buffer 76 is that which is shown on display 20. A buffer is similarly provided for supplying data to other input and output units such as diskette 22 and printer 24. In this regard, block 70 serves to store flags and status information as required by the operation of block 68.

As the operator enters each key stroke at keyboard 12, a corresponding signal is transmitted to processor 16 over path 14 which enters the key stroke command into the memory 26. Upon receipt, a key stroke routine is invoked for block 50 to process the keyed command. It is processed by processor 16 according as to whether it is a control command or a graphic command (Text character) entry. The result of the processing is entered into TSB 28. While graphics and commands are built up in the TSB 28, the text information is retained in display refresh buffer 76 and presented at display 20.

Through control commands, the operator can transfer information among the memory, display, diskette and printer. Selected pages can be called from the diskette 22 and to the memory 26 so that the operator can make changes and corrections to the text and then reenter the corrected text into the diskette 22 or have the corrected text hard copied on printer 24.

Partial Machine Register Organization, Data and Control Flow

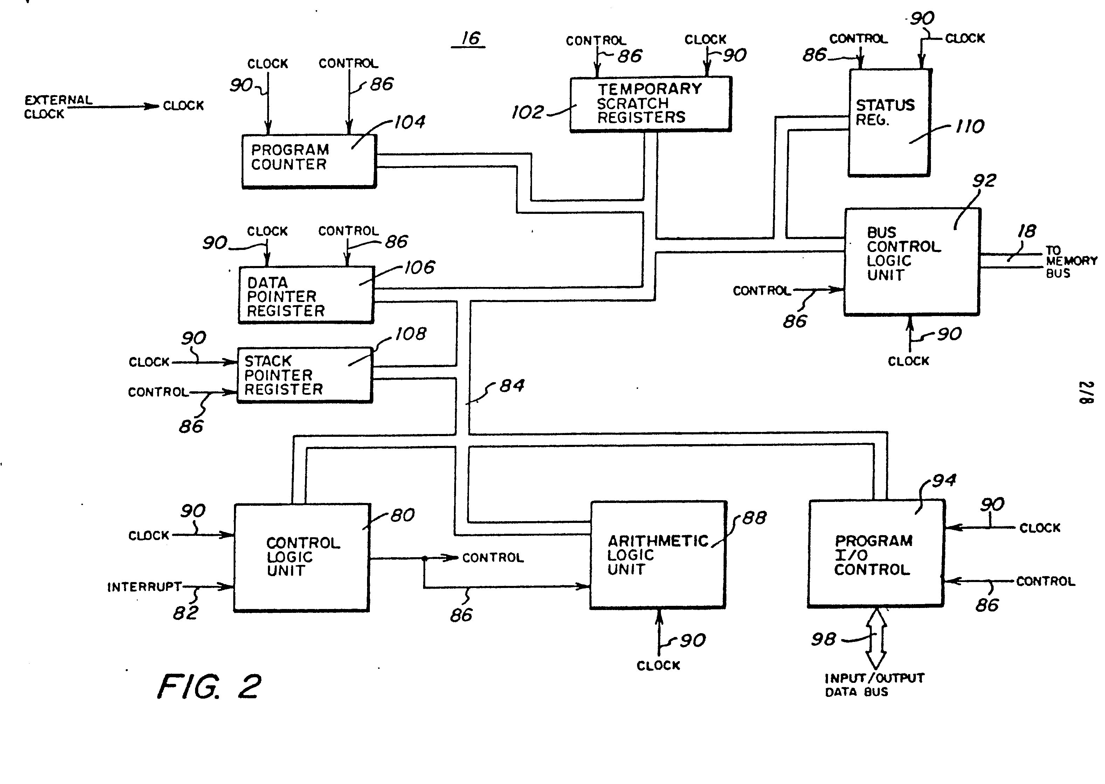

Referring now to FIG. 2, processor 16 illustrates the contemporary machine register organization. The processor may be implemented for example by such a commercially available unit as an INTEL CORPORATION MICROPROCESSOR MODEL NO. 8086.

The processor, according to FIG. 2, includes a control logic unit 80 which responds to interrupt on a device bus 82 from the keyboard 12. Unit 80 is also connected to a data and address bus 84 intercoupling other logic elements.

In response to a fetch instruction from a random access memory 26, unit 80 generates control signals to other logic elements. These signals are coupled by way of the control paths 86 illustratively connecting ALU (Arithmetic Logic Unit) 88. Synchronous operation of unit 80 and other logic elements is enforced by way of clock pulses from an external clock source transmitted over lines 90.

Data and instructions to be processed by processor 16 are entered over Bus Control logic unit 92. Data also may be entered by way of a programmed input/output control logic 94. Logic 92 couples storage elements of RAM 26 and receives instructions by processing data from the I/O control 94 or from RAM 26.

Device control information from processor 16 is passed by I/O control 94 and path 98. Input data on the data bus 98 from keyboard 12 is processed internally through processor 16 by instructions over bus 84 to unit 80 by the ALU 88. The ALU in response to a signal on path 86 and in accordance with instructions received on bus 18, executes arithmetic operations stored in temporary register 102.

The program counter 104 and the registers, such as Data Pointer Register 106, stack Pointer Register 108 and Status Register 110 are well known devices of a microprocessor and will not be described further.

The Interaction Between A Prompting Word Processor
And Operator

The invention is utilized in a word processor in which the processor will "lead" the operator by using the display device to direct and prompt operator action. Further, if said prompting processor supports a semi-infinite extendable file or "indefinite length page", it will neither require the operator to store and recall text passages explicitly nor split pages at arbitrary points in the text of a document to

**0075731**

satisfy system memory constraints. Thus, a table of columns of numbers could indeed be many pages in length. Relative scrolling of buffers with respect to data sources or sinks implements the extendable page and permits block moves. Thus, the TSB 28, for example, uses a fixed-sized window scrolling with respect to diskette 22. In turn, display buffer 26 with a somewhat smaller fixed window scrolls with respect to TSB 28.

A typical prompting word processor invites the operator to use the keyboard for entering text and responding to displayed prompts. Further, cursor movement keys move a cursor on the display. After a work station is powered on and initial program loaded, the operator is presented with a task selection menu. In this context, the task is the type of work to be accomplished. Among the typing tasks which the operator may select are Document Creation, Revision, and Pagination. In the creation or revision of documents, the word processor includes the typewriter plus selected text editing functions. Among these functions are the deletion, movement and copying of blocks of text, printing one or more pages selectively, and changing and altering the formatting control.

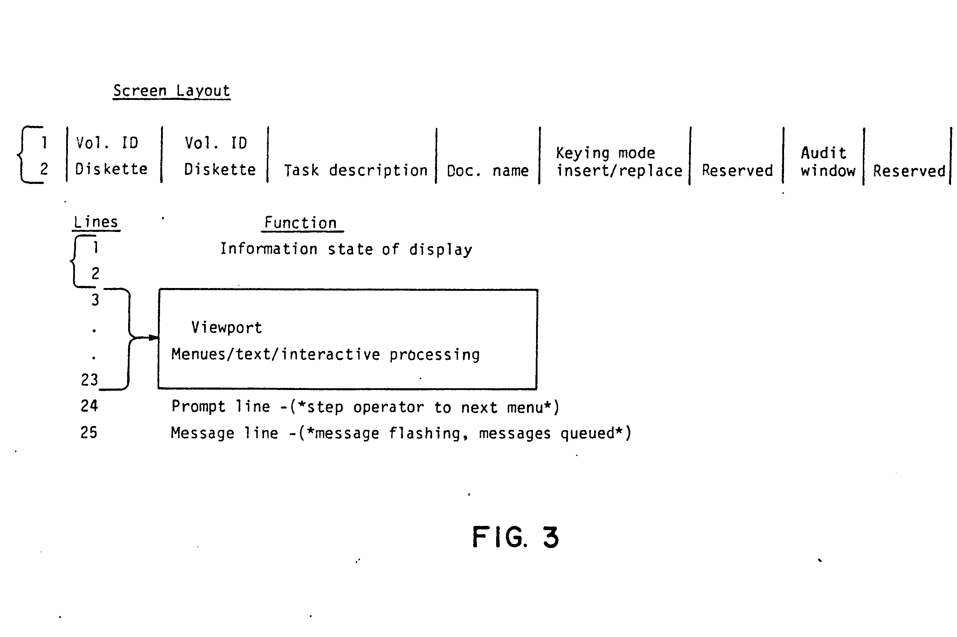

In a prompting word processor, display device 20 could be of the CRT type and be capable of displaying monospaced characters. In this regard, reference should be made to FIG. 3. A typical display is partitioned such that lines 1 and 2 are status lines reflecting the information state of the display. Furthermore, line 1 consists of 4 fields, including a context field, document name, audit window and reserve. The context field displays the current function being performed by the operator. The document name field displays the name of the document currently being processed. The audit window field is a special purpose field relating to cursive characters and control codes.

The second status line is used to present to the operator information about the current state of the system and to indicate the names of the mounted diskettes. The fields in this second status line are diskette volume IDs reserved space, page number, line number, keyboard number, and pitch. Next, lines 3 through 23 define a viewport in which is displayed menus, text, and information necessary for interactive processing. Line 24 is a prompt line, which provides information stepping the operator to the next menu function or activity. Lastly, line 25 is a message line which displays messages or indicates that messages are queued.

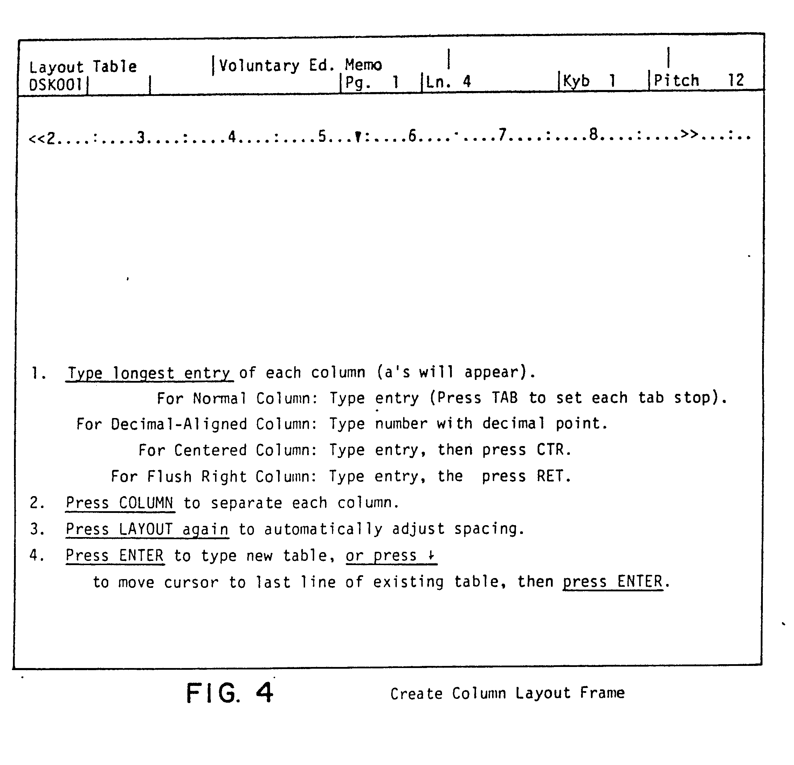

Referring now to FIG. 4, in addition to the information state shown in lines 1 and 2, a scale line appears as the third line of the display image in the viewport or text application window. This line shows the format of a currently cursored line. In all cases, excepting that of special functions such as column layout and margin and tabs, the scale line is displayed so as to match the text and is segmented as the text is segmented. It is apparent that the text/menu viewport which occupies lines 4 through 23 permits the operator to see portions of a document. Contemporary word processors with text editors permit viewing different portions of a document by segmenting or scrolling of the screen contents relative to a memory such as TSB 28.

In word processing systems, documents are defined as a character string organized into one or more pages and identified by an operator specified name. As mentioned previously, documents are stored on diskettes 22. Further, documents cannot span more than one diskette. In word processing systems, document formatting information such as margins, tabs, line spacings, headers and footers are specified by the operator and stored with the document. Typically, delimiters are used to bound string lengths so that a page which may be the highest logical entity within a document would consist of a character string identified by a system provided name and bounded by a Begin Page and End Page control character.

Additionally, a paragraph is a subordinate character string of a page also delimited by designated control characters.

## Table and Layout Functions

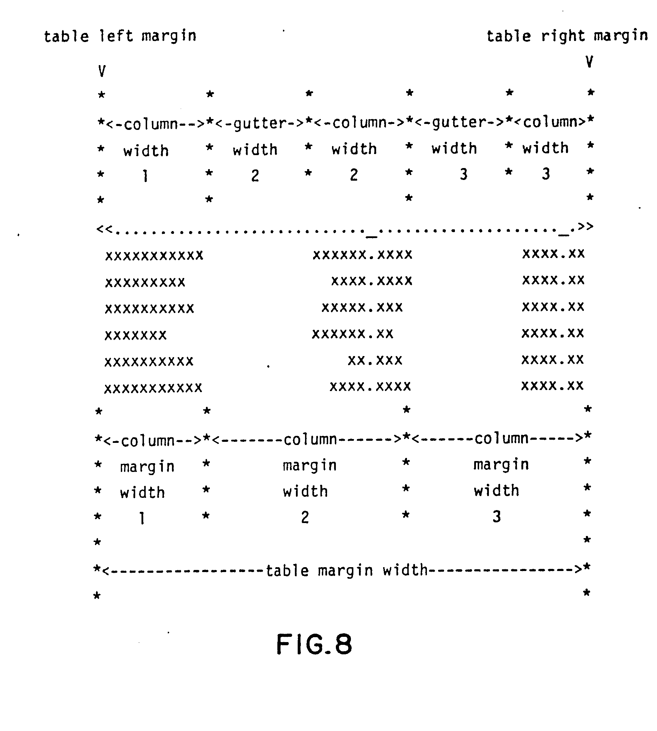

A column may be defined as a vertical array of terms. Multiple columns are designated as a table. Restated, a table can be thought of as consisting of at least one column. A column can be thought of as at least a vertical array of terms having at least one column entry. In turn, a column entry consists of text (numbers/letters) bounded by controls for each unique array position. It can include tab characters. Entries within a column may be aligned by way of tab stops and their attributes. In order to manipulate columns within a table, it must be necessary to isolate both the table and the columns. Control characters are designated Begin Table (BT) and End Table (ET). During the column layout function, the operator specifies a template or an example of the widest entry in either direction for each column and the desired spacing between the columns. From this, the system determines where the column left and right column margins are for each column. In this instance, reference should be made to FIG. 8 which sets out the table/column definitions. Note that a column margin width includes a column width and a gutter width. A gutter is a spacing between adjacent columns except in the case of the first column which abuts the table left margin. In the preferred embodiment, the first line of the table should contain a BT control as the first control of the line for the basic column functions to be executed. Significantly, since the BT and ET control characters delimit the start of a text stream which may be processed as one or more columns of text, they are a bracketing pair which ought neither to be nested nor overlapped in the text stream. Lastly, such bracketing pairs should occur only at line boundaries and preferably span lines and not pages.

In FIG. 8, the gutter and column width parameters specify a set of adjacent vertical columns starting at the table left margin and extending to the right margin. Column and gutter widths are defined in terms of the width of a character included within a predetermined font or in absolute escapement units such as around 1/576 cm per unit. In this regard, a column width is preferably a multiple byte number designating the width of a column text as the number of character units counted relative to the preceding gutter. Likewise, a gutter width is a multiple byte number designating the amount of white space in character widths associated with a vertical column. The first gutter width is specified as a unit count relative to the left margin. Other gutter widths specify unit counts relative to the right edge of the previous column widths.

## The Multi-text Column Formatting Method

The purpose of column layout functions is to provide an opportunity for an operator to specify all of the attributes of a column table format to permit implementing column functions such as delete, move, copy and revise. As mentioned, these attributes include the widths of each of the columns, the tab stops within each column, and the spacing (gutters) between columns. It is desired to format multiple column tables when creating a new table and for revising existing tables, either by way of modifying selected column widths or inserting a new column therein. The general schema involves initializing the system by selectively suppressing text edit controls and reserving resources such as memory allocation. The table formatting is built on two broad steps, that of table building or formatting by way of example such as, for example, operator keying of repeated text characters and controls as an example and encoding and saving the exemplary format. If the table is to be newly created, then the operator keys a new format under a displayed scale line (displayed tab/margin line) designated the 'column example line' by repetitively keying text and control characters. The tab rack as column and gutter width information is encoded as control bytes associated with the BEGIN TABLE (BT) control character. This information is saved. Thus, if the table is to be revised, then the 'column example line' is displayed and reconstituted according to the previously saved encoded information. At that time, the operator can key in revisions by way of example. Again, the revised layout is saved. The ensuing paragraphs will consider these steps in greater detail.

Table Building

Initialization of the system is considered to be a supervisory function. During initialization, selected text editing characteristics are suppressed such as suppressing the maximum limit for a text character line. Other functions include initializing appropriate control blocks for the memory space allocation of parameters as well as the transmission to higher level control blocks of the nature and scope of the foreground function being executed.

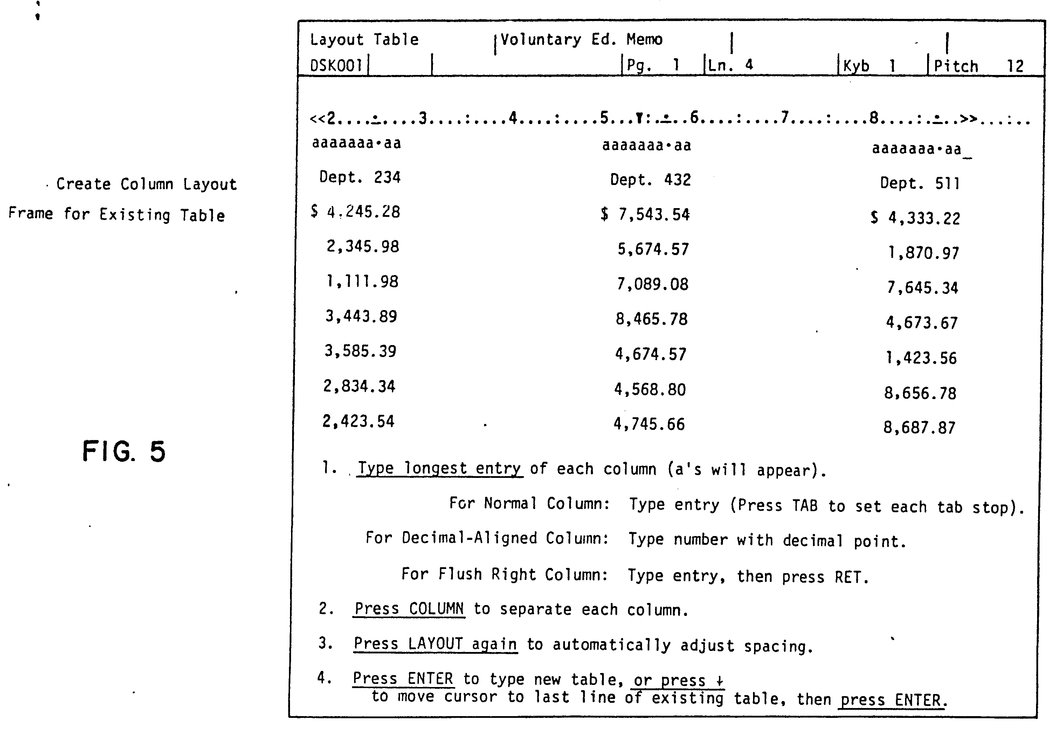

Table building involves formatting or reformatting of a scale line designated as a 'column example line' by way of operator keying and supporting word processor activity. It is necessary to first preserve the present text state by inserting control characters and pointers to save registers and the position of the cursor. If a revision of an existing layout is to be made, then a table revision and column procedure is called. Otherwise, the system considers the table building to be that of creating a new table. In this regard, a menu of instructional text in a create column layout frame is displayed to the operator. The menu provides guidance for the operator to key in appropriate characters relative to the cursored scale. The column layout function is invoked by operator stroking of an appropriate function key. A blank or unformatted line is displayed immediately under a tab scale line in order to permit the operator to type examples of the longest entry in either direction for each column. At this point, reference should be made to FIG. 5. This figure shows repeated entries of text characters defining columns on an example line subordinate to another scale line used for margin and tab settings. At this point, the creation of a new format is completed by the operator.

Table Revision and Column Insertion

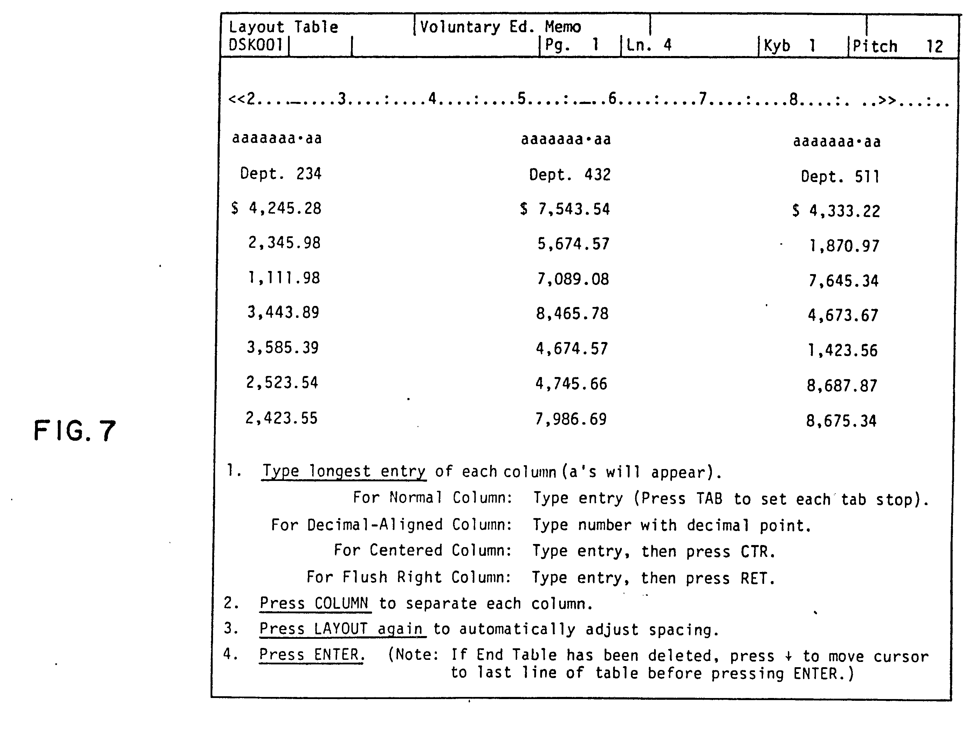

Referring again to FIG. 5, there is shown a layout frame for an existing table while FIG. 7 shows a revised column layout frame as would be displayed to an operator. After the operator lays out a table, the operator may revise the layout of the columns by causing the column example line of the table to be modified. At this point, the microprocessor 16 collaborating with memory 26 rebuilds the existing column example line and restores the previously encoded tab stops to the tab rack. With the information thus displayed, the operator cursors the revision choice by way of inserting a new column or revising the width of an existing column. This is instrumented by moving the cursor to the column left margin of the cursored column for column insert or to the table left margin for column revision. Optionally, a minimum width gutter insertion could automatically be made if a column is to be inserted which is not the first column of the table. The first column has a ∅ gutter. Finally, the operator merely keys in the revisions by repeated text key stroking along the column example line. See FIGS. 5 and 7.

Encoding and Saving the New or Revised Table Format

The machine encodes the tab rack and the column width and gutter parameters as part of the Begin Table control. This is followed by the insertion of appropriate Begin Table and End Table control characters and the saving of the encoded information.

In a preferred form, the machine encoding step begins with the insertion of headers for the appropriate tab and BT controls as well as the initializing of a tab escapement. A series of nested control loops can be used to ascertain gutter sizes, column widths and mark columns with tabs at the left edge of the column width. The insertion of control parameters can be implemented through a series of nested conditional statements testing the character of the table, whether its revision is mere column width modification or a new column, or whether the table is newly created. In the case of an existing table modification, the encoding may selectively use an operator cursored entry of the ET control character.

Typical Operator Interface Protocols

In order to invoke the column layout function, an operator would press a designated function key while a cursor is on the display position representing BT control. The BT control stored in memory contains all of the information concerning the column widths and spacings between each column. A blank line or a previously keyed column example line is displayed immediately below the tab scale line for the operator to type examples of the longest entry in either direction for each column. This is a line on which the operators type examples of each column. Referring to FIG. 4, line 3 contains the scale line, line 4 contains the column example line, lines 5 - 13 contain the first 9 lines of a previously typed table or 9 lines of text following a new table to be laid out and typed. Line 14 contains a divider line to separate the above lines from the informational text below. Preferably, this line should be highlighted by video reverse techniques. Lines 15 - 23 present informational text (menu) to assist the operator in performing the steps required to lay out the table. The first two and the last two character positions of each line 15 - 23 are video reversed spaces. To layout and type the new table, the operator cursors the column line in which the new table is to begin and presses the appropriate function (Column Layout) key. The system then presents the operator with a column layout frame represented by FIG. 4.

Further, the system places a cursor on the column example line which initially contains only a required carrier return. Next, the operator may now type an example for each column. The typing of any graphic character will produce the "a" graphic. In addition, the operator may set the desired tab stops and establish the desired alignment for each column by activating one of the tab setting keys (not shown). Each pair of columns ought to be spaced apart by at least one character width. To define the spacing (gutter) between each column, the operator may manually type the appropriate number of spaces using another control key. Lastly, the operator can enter the completed column layout function and begin typing the new table. At the start of the first line of the table, the system conveniently can insert a line format change containing the tab setting information followed by a BT control containing the column width spacing information. At the beginning of the line following the last line of a table, a ET control will be inserted to terminate the table.

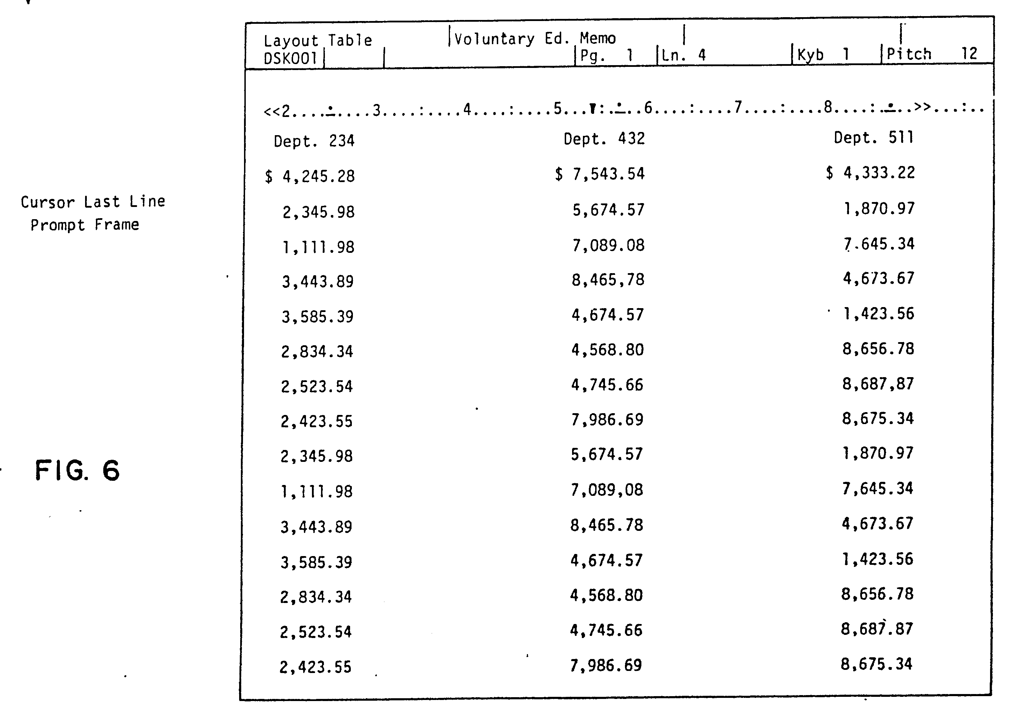

In order to layout an existing table, the operator cursors the first line of the table and presses the appropriate function (Column Layout) key. The system then presents the operator with a frame shown in FIG. 5. The cursor of the display is placed on the column example line by the system which initially contains only a required carrier return. The operator can now type an example for each column. Each pair of columns again must be separated by at least one character width. Refering to Figure 6 after laying out the column example line, the operator cursors to the last line of the table. In response, the system will insert the ET control. The BT control was inserted at the start of the first line of the table as previously described.

In revising the layout of an existing table, the operator cursor to the BT control and presses an appropriate function (enter) key. The system will present the operator with a column layout frame as shown in FIG. 7. With the previously typed column example line being displayed under the scale line, now, the operator may revise the example for any column.

While the invention has been particularly described with
reference to a preferred embodiment thereof, it will be
understood by those skilled in the art that various other
changes by equivalent means or steps may be made such as, for
example, utilizing other types of display devices input/
output devices, other memory organization or any other way of
line scanning and exampling without departing from the scope
of the invention as defined by the claims.

## CLAIMS

1. A multiple text-column formatting method in an interactive word processing system having a display screen, a keyboard, a memory for storing formats, and an intercoupling microprocessor characterized in that it comprises the steps of:

   formatting the column widths and gutters defining a multicolumn table by way of an operator keyed-in example line of repeated text and control characters; and

   vector encoding and saving said example line in the memory suitable for revision upon recall.

2. Method according to claim 1, characterized in that revising the format of an existing table includes the steps of: operator selecting of a revision choice by stroking a predesignated function key, building a formatted line from the vector encoded and saved repeated text and control characters, and operator entering of repeated text and control characters for revision of column widths or the insertion of a new column according to the revision choice.

3. Method according to claims 2, characterized in that :

   the step of formatting for creating a new table format is by displaying a scale line, cursoring to the table margin intersecting the line, entering repeated text and control characters whose escapements along said line define the width maximum for each column, gutters between adjacent columns, and relative positions between said columns and gutters to the table margin, and vector encoding and saving of the formatted line; and

   the step of revising the format of an existing table is by rebuilding the line from the defining text and control character sequence obtained from the counterpart vector encoding, cursoring to either a designated table or column margin on the display of the rebuilt line, entering repeated text and control characters, defining an altered width of an existing column or a new column, and vector encoding and saving the revised line.

4. Method according to claim 2 or 3 characterized in that the steps of revising the format of an existing table by entering repeated text and control characters defining a new column further includes the steps of:

ascertaining the position of the column relative to other columns in the table and, if not the first table column, then inserting a minimum space if not otherwise defined by the repeated text and control character entries.

5. Method according to claim 3 or 4 characterized in that the steps of revising the format of an existing table is by rebuilding the formatted line from the defining text and control characters sequence previously vector encoded further includes the steps of:

restoring tab stops by causing the cursor to be moved to the start of the column example line, determining whether a tab stop is set at the table left margin and obtaining its alignment, and repeating the determination until the last tab stop is set or the end of the example line is encountered.

6. Method according to claim 5 characterized in that the step of restoring tab stops to the column example line includes the steps of:

scanning the tab rack for the next tab stop, and if the tab stop is found, determining the tab stop graphic to be inserted and replacing the column width character by the tab graphic, and incrementing the cursor escapement by an appropriate character width.

FIG. 1

FIG. 2

| | Vol. ID | Vol. ID | | | Keying mode | | Audit | |
|---|---|---|---|---|---|---|---|---|
| 1 | Diskette | Diskette | Task description | Doc. name | insert/replace | Reserved | window | Reserved |
| 2 | | | | | | | | |

Lines          Function

1      Information state of display

2

3

.      Viewport

.      Menues/text/interactive processing

23

24      Prompt line -(*step operator to next menu*)

25      Message line -(*message flashing, messages queued*)

## FIG. 3

0075731

```
Layout Table      |Voluntary Ed. Memo          |
DSK001|         |                  |Pg.  1  |Ln.  4         |Kyb  1   |Pitch   12
```

```
<<2....:....3....:....4....:....5...▼:....6....·....7....:....8....:....>>...:..
```

1.  <u>Type longest entry</u> of each column (a's will appear).

    For Normal Column: Type entry (Press TAB to set each tab stop).

    For Decimal-Aligned Column: Type number with decimal point.

    For Centered Column: Type entry, then press CTR.

    For Flush Right Column: Type entry, the  press RET.

2.  Press <u>COLUMN</u> to separate each column.

3.  Press <u>LAYOUT again</u> to automatically adjust spacing.

4.  Press <u>ENTER</u> to type new table, <u>or press ↓</u>

    to move cursor to last line of existing table, then <u>press ENTER</u>.

## FIG. 4    Create Column Layout Frame

Create Column Layout
Frame for Existing Table

# FIG. 5

```
| Layout Table        |Voluntary Ed. Memo  |                    |              |
| DSK001|       |     |              |Pg.  1 |Ln.  4 |Kyb  1  |Pitch   12 |
```

`<<2....:.....3....:....4....:....5...T:..:..6....:....7....:....8....:..:..>>...:..`

| aaaaaaa·aa | aaaaaaa·aa | aaaaaaa·aa |
|------------|------------|------------|
| Dept. 234  | Dept. 432  | Dept. 511  |
| $ 4.245.28 | $ 7,543.54 | $ 4,333.22 |
| 2,345.98   | 5,674.57   | 1,870.97   |
| 1,111.98   | 7,089.08   | 7,645.34   |
| 3,443.89   | 8,465.78   | 4,673.67   |
| 3,585.39   | 4,674.57   | 1,423.56   |
| 2,834.34   | 4,568.80   | 8,656.78   |
| 2,423.54   | 4,745.66   | 8,687.87   |

1.  Type longest entry of each column (a's will appear).

   For Normal Column:  Type entry (Press TAB to set each tab stop).

   For Decimal-Aligned Column:  Type number with decimal point.

   For Flush Right Column:  Type entry, then press RET.

2.  Press COLUMN to separate each column.

3.  Press LAYOUT again to automatically adjust spacing.

4.  Press ENTER to type new table, or press ↓
      to move cursor to last line of existing table, then press ENTER.

FIG. 6

Cursor Last Line
Prompt Frame

| Layout Table DSK001 | Voluntary Ed. Memo | | Pg. 1 | Ln. 4 | Kyb 1 | Pitch 12 |
|---|---|---|---|---|---|---|

```
<<2....:....3....:....4....:....5...▼:..:..6....:....7....:....8....:..:..>>...:..
```

| Dept. 234 | Dept. 432 | Dept. 511 |
|---|---|---|
| $ 4,245.28 | $ 7,543.54 | $ 4,333.22 |
| 2,345.98 | 5,674.57 | 1,870.97 |
| 1,111.98 | 7,089.08 | 7.645.34 |
| 3,443.89 | 8,465,78 | 4,673.67 |
| 3,585.39 | 4,674.57 | 1,423.56 |
| 2,834.34 | 4,568.80 | 8,656.78 |
| 2,523.54 | 4,745.66 | 8,687,87 |
| 2,423.55 | 7,986.69 | 8,675.34 |
| 2,345.98 | 5,674.57 | 1,870.97 |
| 1,111.98 | 7,089,08 | 7,645.34 |
| 3,443.89 | 8,465.78 | 4,673.67 |
| 3,585.39 | 4,674.57 | 1,423.56 |
| 2,834.34 | 4,568.80 | 8,656.78 |
| 2,523.54 | 4,745.66 | 8,687.87 |
| 2,423.55 | 7,986.69 | 8,675.34 |

0075731

**FIG. 7**

```
┌─────────────────────────────────────────────────────────────────────────────┐
│ Layout Table      │Voluntary Ed. Memo    │                │              │    │
│ DSK001│           │              │Pg.  1 │Ln.  4           │Kyb  1   │Pitch  12│
├─────────────────────────────────────────────────────────────────────────────┤
```

<<2...._....3....:....4...:....5....:._..6....:....7....:....8....:. ..>>...:..

aaaaaaa·aa                      aaaaaaa·aa                      aaaaaaa·aa

Dept. 234                       Dept. 432                       Dept. 511

$ 4,245.28                      $ 7,543.54                      $ 4,333.22

  2,345.98                        5,674.57                        1,870.97

  1,111.98                        7,089.08                        7,645.34

  3,443.89                        8,465.78                        4,673.67

  3,585.39                        4,674.57                        1,423.56

  2,523.54                        4,745.66                        8,687.87

  2,423.55                        7,986.69                        8,675.34


1.  Type longest entry of each column (a's will appear).
            For Normal Column:  Type entry (Press TAB to set each tab stop).
    For Decimal-Aligned Column:  Type number with decimal point.
          For Centered Column:  Type entry, then press CTR.
       For Flush Right Column:  Type entry, then press RET.
2.  Press COLUMN to separate each column.
3.  Press LAYOUT again to automatically adjust spacing.
4.  Press ENTER.  (Note: If End Table has been deleted, press ↓ to move cursor
                   to last line of table before pressing ENTER.)

0075731

```
table left margin                              table right margin

    V                                               V
    *            *            *            *            *         *

    *<-column-->*<-gutter->*<-column->*<-gutter->*<column>*
    *  width     *  width   *  width    *  width   * width  *
    *    1       *    2     *    2      *    3     *   3    *
    *            *                      *                   *

    <<.............................._...................._.>>
    XXXXXXXXXXX              XXXXXX.XXXX              XXXX.XX
    XXXXXXXXX                XXXX.XXXX                XXXX.XX
    XXXXXXXXXX               XXXXX.XXX                XXXX.XX
    XXXXXXX                  XXXXXX.XX                XXXX.XX
    XXXXXXXXXX                 XX.XXX                 XXXX.XX
    XXXXXXXXXXX              XXXX.XXXX                XXXX.XX
    *            *                      *                   *

    *<-column-->*<-------column------>*<------column----->*
    *  margin    *       margin        *      margin        *
    *  width     *       width         *      width         *
    *    1       *         2           *        3           *
    *                                                       *
    *<----------------table margin width---------------->*
    *                                                       *
```

## FIG.8